# FASCICULE DE BREVET EUROPEEN

(11) **EP 3 664 301 B1**
(45) Date de publication et mention de la délivrance du brevet: **18.08.2021**
(21) Numéro de dépôt: 18210762.3
(22) Date de dépôt: 06.12.2018
(51) Int. Cl.: H04B 1/403

(54) **EMETTEUR-RECEPTEUR COMPRENANT UNE PUCE ELECTRONIQUE**
SENDER/EMPFÄNGER, DER EINEN ELEKTRONISCHEN CHIP UMFASST
TRANSMITTER-RECEIVER COMPRISING AN ELECTRONIC CHIP

(43) Date de publication de la demande: 10.06.2020
(73) Titulaire: The Swatch Group Research and Development Ltd, 2074 Marin (CH)
(72) Inventeur: CASAGRANDE, Arnaud, 2014 Bôle (CH); SCORDILIS, Thierry, 2036 Cormondrèche (CH); DE ROSA, Luca, 2013 Colombier (CH); GORISSE, Jean, 2000 Neuchâtel (CH); AREND, Jean-Luc, 2035 Corcelles (CH)
(74) Mandataire: ICB SA

(56) Documents cités:
- EP-A1- 3 168 983
- WO-A1-2016/022690
- US-A1- 2007 205 865
- US-A1- 2014 150 554

## Description

### DOMAINE TECHNIQUE DE L'INVENTION

L'invention concerne un émetteur-récepteur de signaux radiofréquences et de signaux d'un autre domaine fréquentiel que le domaine radiofréquence, tels que des signaux optiques ou infrarouges ou sonores ou ultrasonores, l'émetteur-récepteur comportant une puce électronique.

### ETAT DE LA TECHNIQUE

Les systèmes de communication radiofréquence ou optique ou ultrasonore ou utilisant tout autre milieu de transmission ne mettent généralement en œuvre qu'un seul moyen de communication pour transmettre ou recevoir des signaux de données. Autrement dit, dans de tels systèmes, un seul milieu de transmission est généralement utilisé par chaque système.

Il est connu de concevoir des dispositifs mobiles de communication ayant la possibilité de recevoir des signaux radiofréquences et/ou optiques et/ou ultrasonores, autrement dit pouvant recevoir des signaux provenant d'au moins deux milieux de transmission différents. Toutefois, de tels dispositifs mobiles de communication ne sont pas en mesure de partager des mêmes moyens de traitement pour traiter des signaux provenant de milieux de transmission différents. En outre, de tels dispositifs ne permettent pas d'effectuer une communication en full-duplex dans des milieux de transmission différents afin de pouvoir aussi transmettre d'autres signaux si le milieu radiofréquence est perturbé.

Le document US2007205865 décrit un émetteur-récepteur comprenant un module RF et un module RFID, les modules partageant un synthétiseur de fréquences. Par ailleurs, le document US2014150554 décrit un circuit comprenant un détecteur et un module RF partageant le traitement des signaux effectués par le microcontrôleur.

### RÉSUMÉ DE L'INVENTION

L'invention a donc pour but de fournir un émetteur-récepteur comprenant une puce électronique, permettant de partager des mêmes moyens de traitement de la puce pour traiter des signaux provenant de milieux de transmission différents, tout en offrant une possibilité de communication en full-duplex dans de tels milieux de transmission différents.

A cet effet, l'invention concerne un émetteur-récepteur comprenant une puce électronique, qui comprend les caractéristiques mentionnées dans la revendication indépendante 1.

Des formes particulières de l'émetteur-récepteur sont définies dans les revendications dépendantes 2 à 13.

Un avantage de la présente invention est qu'avec l'agencement proposé dans l'émetteur-récepteur selon l'invention, il est possible d'utiliser la même chaîne de réception radiofréquence que celle utilisée dans un émetteur-récepteur de signaux radiofréquences classique, pour démoduler des signaux d'un autre milieu de transmission optique ou sonore.

En outre, grâce à la présence dans l'émetteur-récepteur d'un second synthétiseur de fréquences configuré pour synthétiser un signal basse fréquence modulé fourni par la borne de sortie auxiliaire, il est possible d'effectuer une communication en full-duplex dans des milieux de transmission différents. Le second synthétiseur de fréquences est typiquement un synthétiseur de fréquences à basse fréquence. La fréquence centrale du signal modulé fourni par le second synthétiseur de fréquences est égale à la valeur de la fréquence intermédiaire.

Un autre avantage de l'émetteur-récepteur selon l'invention est qu'en cas de milieu radiofréquence perturbé, il est tout de même possible d'effectuer une communication sécurisée, confidentielle et efficace sur un autre milieu que le milieu radiofréquence. Une telle perturbation du milieu radiofréquence peut par exemple provenir d'une saturation en réseaux radiofréquences domestiques de type WiFi ou Bluetooth.

Un autre avantage de l'émetteur-récepteur selon l'invention est qu'il permet une localisation précise de son porteur, que ce dernier soit un utilisateur ou un objet. Ceci provient précisément des propriétés de certains milieux de transmission particuliers, tels que par exemple les milieux infrarouge et ultrasonore. Ceci peut être avantageusement utilisé dans des applications du type localisation de personnes dans une pièce d'un bâtiment, système d'éclairage public et/ou urbain, ou encore pour des balises sous-marines ou surfaciques de communication.

Un autre avantage de l'émetteur-récepteur selon l'invention est qu'il permet d'ajouter facilement une fonctionnalité additionnelle sur un émetteur-récepteur radiofréquences existant, lui conférant des propriétés intéressantes, typiquement des propriétés directionnelles permettant par exemple d'assurer la confidentialité de la transmission. Une telle fonctionnalité ajoutée consiste par exemple en l'ajout de deux diodes infrarouges, l'une de réception et l'autre d'émission d'un signal infrarouge.

Un autre avantage de l'agencement proposé dans l'émetteur-récepteur selon l'invention est qu'il permet de limiter la consommation énergétique de l'émetteur-récepteur, en permettant notamment de réveiller la fonction radiofréquence uniquement par détection de signaux d'un autre milieu de transmission. Une telle détection peut par exemple consister en une détection de signaux infrarouges à faible consommation, ou encore de signaux issus de capteurs RFID (de l'anglais « Radio Frequency Identification ») disposés dans un réseau de capteurs à proximité de l'émetteur-récepteur.

Avantageusement, le premier synthétiseur de fréquences comprend par exemple un modulateur interne sigma-delta, et le second synthétiseur de fréquences peut être constitué d'une partie de ce modulateur sigma-delta, alors reconfigurée en synthétiseur basse fréquence. Ceci permet de mutualiser encore davantage des ressources déjà présentes dans la puce électronique pour le traitement de signaux radiofréquences. Ceci permet ainsi un gain en espace et en composants sur la puce, et donc une réduction des coûts.

### BRÈVE DESCRIPTION DES FIGURES

Les buts, avantages et caractéristiques de l'émetteur-récepteur apparaîtront mieux dans la description suivante sur la base d'au moins une forme d'exécution non limitative illustrée par la figure unique jointe, représentant l'émetteur-récepteur selon un exemple de réalisation de l'invention.

### DESCRIPTION DETAILLEE DE L'INVENTION

Dans la description suivante, tous les composants des synthétiseurs de fréquence, notamment dans un émetteur-récepteur de signaux radiofréquences et de signaux d'un autre domaine fréquentiel que le domaine radiofréquence, qui sont bien connus d'un homme du métier dans ce domaine technique, ne sont décrits que de manière simplifiée.

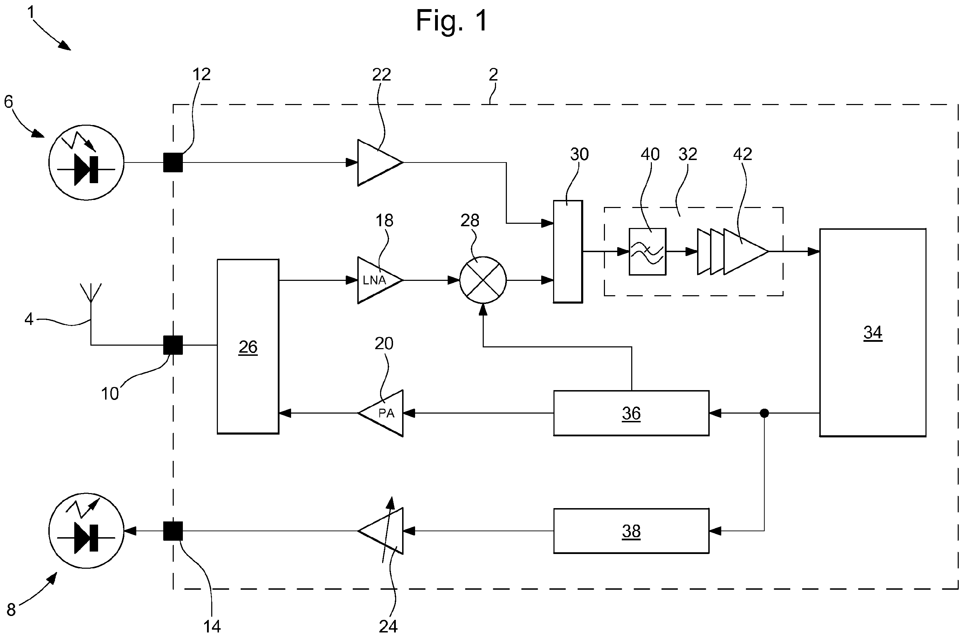

La figure 1 représente de manière générale un émetteur-récepteur 1. L'émetteur-récepteur 1 comprend une puce électronique 2. Dans un mode de fonctionnement normal, l'émetteur-récepteur 1 comprend également une antenne 4 d'émission et de réception de signaux radiofréquences à une fréquence porteuse de l'ordre de 2,4 GHz, des moyens 6 de réception d'un signal optique, infrarouge, sonore ou ultrasonore, et des moyens 8 d'émission d'un signal optique, infrarouge, sonore ou ultrasonore. Dans l'exemple de réalisation illustré sur la figure 1, les moyens de réception 6 sont constitués d'une diode infrarouge de réception d'un signal infrarouge, et les moyens d'émission 8 sont constitués d'une diode infrarouge d'émission d'un signal infrarouge.

La puce électronique 2 comporte une borne d'entrée et de sortie radiofréquence 10 reliée à l'antenne 4, une borne d'entrée auxiliaire 12 reliée aux moyens de réception 6, et une borne de sortie auxiliaire 14 reliée aux moyens d'émission 8. La borne d'entrée et de sortie radiofréquence 10 est destinée à recevoir et à transmettre des signaux à haute fréquence. La borne d'entrée auxiliaire 12 et la borne de sortie auxiliaire 14 sont destinées respectivement à recevoir et à transmettre des signaux à basse fréquence, typiquement des signaux périodiques de fréquence sensiblement égale à 400 kHz. La puce électronique 2 comporte en outre, préférentiellement, un amplificateur de réception 18 à faible bruit LNA recevant des signaux de l'antenne 4, un amplificateur 20 de puissance PA de sortie de signaux modulés, un amplificateur de réception basse fréquence 22 recevant des signaux de la borne d'entrée auxiliaire 12, et un composant programmable d'alimentation 24 fournissant un signal de sortie modulé à la borne de sortie auxiliaire 14. Un tel signal de sortie modulé est destiné aux moyens 8 d'émission d'un signal optique, infrarouge, sonore ou ultrasonore. Le composant programmable d'alimentation 24 est par exemple un amplificateur basse fréquence programmable, comme illustré sur la figure 1. En variante, le composant programmable d'alimentation 24 peut être une source de tension ou de courant programmable. La puce électronique 2 comprend également, de préférence, un adaptateur d'impédance 26 connecté entre la borne d'entrée et de sortie radiofréquence 10 d'une part, et l'amplificateur de réception à faible bruit 18 et l'amplificateur de puissance 20 d'autre part.

La puce électronique 2 comporte également un mélangeur 28, un commutateur 30 à deux entrées, un étage de filtrage et d'amplification 32, un modulateur-démodulateur 34, un premier synthétiseur de fréquences 36 et un second synthétiseur de fréquences 38.

Une première entrée du mélangeur 28 est connectée à la sortie de l'amplificateur de réception 18 à faible bruit LNA. Une deuxième entrée du mélangeur 28 est reliée à une sortie du premier synthétiseur de fréquences 36. Le mélangeur 28 est ainsi destiné à mélanger en fréquence le signal radiofréquence amplifié reçu de l'amplificateur de réception 18, avec un signal oscillant fourni par le premier synthétiseur de fréquences 36, afin de fournir un signal périodique intermédiaire à une fréquence intermédiaire. Le signal oscillant présente une fréquence de valeur par exemple sensiblement égale à 2,4 GHz. Le signal périodique intermédiaire fourni en sortie du mélangeur 28 est un signal intermédiaire simple ou en quadrature. La fréquence intermédiaire de ce signal intermédiaire est par exemple sensiblement égale à 400 kHz.

Une première entrée du commutateur 30 est connectée à la sortie de l'amplificateur de réception basse fréquence 22. Une deuxième entrée du commutateur 30 est connectée à la sortie du mélangeur 28. Le commutateur 30 est configuré pour sélectionner l'un des deux signaux présents à ses entrées et pour fournir en sortie le signal sélectionné, à destination de l'étage de filtrage et d'amplification 32. Il est ainsi possible d'utiliser la partie de fréquences intermédiaires du circuit radiofréquence et d'y injecter le signal basse fréquence provenant de la borne d'entrée auxiliaire 12, en utilisant le commutateur 30. En outre, l'agencement proposé dans l'émetteur-récepteur 1 selon l'invention permet d'utiliser la même chaîne de réception radiofréquence pour démoduler des signaux d'un autre milieu de transmission, en conservant une taille de puce standard.

L'étage de filtrage et d'amplification 32 est connecté entre la sortie du commutateur 30 et l'entrée du modulateur-démodulateur 34. Comme illustré sur la figure 1, l'étage de filtrage et d'amplification 32 comporte un filtre passe-bas ou passe-bande 40, et au moins un amplificateur 42 qui amplifie le signal intermédiaire filtré.

Le modulateur-démodulateur 34 permet de démoduler les signaux de données reçus, et est lui-même relié à une unité de traitement non représentée sur la figure. Il est à noter que généralement les signaux intermédiaires filtrés, amplifiés et démodulés sont convertis numériquement dans l'unité de traitement, c'est-à-dire échantillonnés en étant cadencé par un signal d'horloge provenant d'un oscillateur de référence.

Le premier synthétiseur de fréquences 36 est connecté entre la sortie du modulateur-démodulateur 34 et l'amplificateur 20 de puissance PA. Comme mentionné précédemment, une autre sortie du premier synthétiseur de fréquences 36 est reliée à une entrée du mélangeur 28. Le premier synthétiseur de fréquences 36 est configuré pour fournir un signal modulé par exemple en fréquence à la borne d'entrée et de sortie radiofréquence 10, via l'amplificateur de puissance 20. La fréquence porteuse d'un tel signal modulé en fréquence est par exemple de l'ordre de 2,4 GHz. Le premier synthétiseur de fréquences 36 comprend typiquement par exemple un modulateur interne sigma-delta, non représenté sur la figure 1. Le premier synthétiseur de fréquences 36 peut par exemple être un synthétiseur à modulation de fréquence FSK (Frequency Shift Keying en terminologie anglaise) ou GFSK (Gaussian Frequency Shift Keying en terminologie anglaise) à deux points.

Le second synthétiseur de fréquences 38 est connecté entre la sortie du modulateur-démodulateur 34 et le composant programmable d'alimentation 24. Le second synthétiseur de fréquences 38 est configuré pour fournir un signal modulé par exemple en fréquence au composant programmable d'alimentation 24. La fréquence centrale du signal synthétisé par le second synthétiseur de fréquences 38 est égale à la fréquence intermédiaire. Cette fréquence (synthétisée par le second synthétiseur de fréquences 38) est ainsi par exemple sensiblement égale à 400 kHz. Le signal modulé fourni par le second synthétiseur de fréquences 38 au composant programmable d'alimentation 24, est par exemple modulé en fréquence avec une déviation de ±50 kHz autour de 400 kHz.

Dans un exemple de réalisation avantageux de l'invention, le second synthétiseur de fréquences 38 fait partie du premier synthétiseur de fréquences 36 et est configuré pour utiliser le modulateur interne sigma-delta de ce dernier pour la synthèse du signal modulé.

Le second synthétiseur de fréquences 38 est typiquement un synthétiseur de fréquences à basse fréquence. La borne de sortie auxiliaire 14, qui est une borne de sortie d'un signal à basse fréquence, fournit aux moyens d'émission 8 un signal basse fréquence modulé. Les moyens d'émission 8 émettent, à réception de ce signal basse fréquence modulé, un signal optique, infrarouge, sonore ou ultrasonore.

On conçoit ainsi que, grâce à l'émetteur-récepteur selon l'invention, il est possible d'effectuer une communication en full-duplex dans des milieux de transmission différents, afin de pouvoir aussi transmettre d'autres signaux si le milieu radiofréquence est perturbé.

## Revendications

1. Emetteur-récepteur (1) comprenant une puce électronique (2), la puce électronique (2) comportant une borne d'entrée et de sortie radiofréquence (10) destinée à recevoir et à transmettre par une antenne (4) de l'émetteur-récepteur (1) un signal radiofréquence, une borne d'entrée auxiliaire (12) destinée à recevoir un signal issu d'un transducteur optoélectronique ou piézoélectrique, une borne de sortie auxiliaire (14) destinée à fournir un signal basse fréquence modulé à un composant (8) d'émission d'ondes optiques ou sonores ou de pression, la puce électronique (2) comportant en outre un mélangeur (28) pour mélanger en fréquence un signal radiofréquence reçu avec un signal oscillant fourni par un premier synthétiseur de fréquences (36) afin de fournir un signal périodique intermédiaire à une fréquence intermédiaire, un commutateur à deux entrées (30) relié d'une part à une sortie du mélangeur (28) et d'autre part à la borne d'entrée auxiliaire (12), un étage de filtrage et d'amplification (32) relié en sortie du commutateur (30), un modulateur-démodulateur (34) relié en sortie de l'étage de filtrage et d'amplification (32), le premier synthétiseur de fréquences (36) étant connecté entre la sortie du modulateur-démodulateur (34) et la borne d'entrée et de sortie radiofréquence (10), le premier synthétiseur de fréquences (36) étant configuré pour fournir un signal modulé en fréquence à la borne d'entrée et de sortie radiofréquence (10),
**caractérisé en ce que** la puce électronique (2) comporte en outre un second synthétiseur de fréquences (38) connecté entre la sortie du modulateur-démodulateur (34) et la borne de sortie auxiliaire (14), le second synthétiseur de fréquences (38) étant configuré pour synthétiser un signal basse fréquence modulé fourni par la borne de sortie auxiliaire (14), la valeur centrale de ladite basse fréquence étant égale à la valeur de la fréquence intermédiaire.

2. Emetteur-récepteur (1) selon la revendication 1, **caractérisé en ce que** la puce électronique (2) comprend en outre un composant programmable d'alimentation (24) connecté entre la sortie du second synthétiseur de fréquences (36) et la borne de sortie auxiliaire (14).

3. Emetteur-récepteur (1) selon la revendication 2, **caractérisé en ce que** le composant programmable d'alimentation (24) est un amplificateur basse fréquence programmable ou une source de tension ou de courant programmable.

4. Emetteur-récepteur (1) selon la revendication 2 ou 3, **caractérisé en ce que** le second synthétiseur de fréquences (38) est configuré en outre pour moduler le signal qu'il fournit au composant programmable d'alimentation (24).

5. Emetteur-récepteur (1) selon la revendication 4, **caractérisé en ce que** ladite modulation est une modulation de fréquence ou de phase.

6. Emetteur-récepteur (1) selon l'une quelconque des revendications 2 à 5, **caractérisé en ce qu'**il comprend en outre une diode infrarouge (8) ou optique, ou un composant d'émission d'un signal sonore ou ultrasonore connecté(e) à la borne de sortie auxiliaire (14) de la puce électronique (2).

7. Emetteur-récepteur (1) selon l'une quelconque des revendications précédentes, **caractérisé en ce qu'**il comprend en outre une diode infrarouge (6) ou optique, ou un transducteur piézoélectrique connecté(e) à la borne d'entrée auxiliaire (12) de la puce électronique (2).

8. Emetteur-récepteur (1) selon l'une quelconque des revendications précédentes, **caractérisé en ce qu'**il comprend en outre une antenne (4) d'émission et de réception de signaux radiofréquences, connectée à la borne d'entrée et de sortie radiofréquence (10) de la puce électronique (2).

9. Emetteur-récepteur (1) selon l'une quelconque des revendications précédentes, **caractérisé en ce que** l'étage de filtrage et d'amplification (32) comprend un filtre passe-bas ou passe-bande (40), et au moins un amplificateur (42) du signal intermédiaire filtré, connecté en sortie du filtre (40).

10. Emetteur-récepteur (1) selon l'une quelconque des revendications précédentes, **caractérisé en ce que** le premier synthétiseur de fréquences (36) comprend un modulateur interne sigma-delta, et **en ce que** le second synthétiseur de fréquences (38) fait partie du premier synthétiseur de fréquences (36) et est configuré pour utiliser ledit modulateur interne sigma-delta pour la synthèse du signal modulé fourni par la borne de sortie auxiliaire (14).

11. Emetteur-récepteur (1) selon l'une quelconque des revendications précédentes, **caractérisé en ce que** la puce électronique (2) comprend en outre un amplificateur de réception à faible bruit (18) connecté entre la borne d'entrée et de sortie radiofréquence (10) et une entrée du mélangeur (28).

12. Emetteur-récepteur (1) selon l'une quelconque des revendications précédentes, **caractérisé en ce que** la puce électronique (2) comprend en outre un amplificateur de puissance (20) connecté entre la sortie du premier synthétiseur de fréquences (36) et la borne d'entrée et de sortie radiofréquence (10).

13. Emetteur-récepteur (1) selon l'une quelconque des revendications précédentes, **caractérisé en ce que** la puce électronique (2) comprend en outre un amplificateur de réception basse fréquence (22) connecté entre la borne d'entrée auxiliaire (12) et une entrée du commutateur (30).

## Patentansprüche

1. Senderempfänger (1), umfassend einen elektronischen Chip (2), wobei der elektronische Chip (2) einen Hochfrequenz-Eingangs/AusgangsAnschluss (10), der dazu bestimmt ist, über eine Antenne (4) des Senderempfängers (1) ein Hochfrequenzsignal zu empfangen und zu senden, einen ergänzenden Eingangsanschluss (12), der dazu bestimmt ist, ein von einem optoelektronischen oder piezoelektrischen Wandler stammendes Signal zu empfangen, und einen ergänzenden Ausgangsanschluss (14), der dazu bestimmt ist, ein niederfrequentes moduliertes Signal zu einer Komponente (8) zum Senden von Lichtquellen, Schallwellen oder Druckwellen zu liefern, umfasst, wobei der elektronische Chip (2) ferner einen Mischer (28) zum Mischen eines empfangenen Hochfrequenzsignals mit einem von einem ersten Frequenzsynthetisierer (36) gelieferten oszillierenden Signals in der Frequenz umfasst, um ein periodisches Zwischensignal mit einer Zwischenfrequenz zu liefern, einen Zweiwegschalter (30), der einerseits mit einem Ausgang des Mischers (28) und andererseits mit dem ergänzenden Eingangsanschluss (12) verbunden ist, eine Filter- und Verstärkungsstufe (32), die mit dem Ausgang des Schalters (30) verbunden ist, und einen Modulator-Demodulator (34), der mit dem Ausgang der Filter- und Verstärkungsstufe (32) verbunden ist, umfasst, wobei der erste Frequenzsynthetisierer (36) zwischen den Ausgang des Modulator-Demodulators (34) und den Hochfrequenz-Eingangs/AusgangsAnschluss (10) geschaltet ist und wobei der erste Frequenzsynthetisierer (36) so konfiguriert ist, dass er an den Hochfrequenz-Eingangs/AusgangsAnschluss (10) ein frequenzmoduliertes Signal liefert,
**dadurch gekennzeichnet, dass** der elektronische Chip (2) ferner einen zweiten Frequenzsynthetisierer (38) umfasst, der zwischen den Ausgang des Modulator-Demodulators (34) und den ergänzenden Ausgangsanschluss (14) geschaltet ist, wobei der zweite Frequenzsynthetisierer (38) so konfiguriert ist, dass er ein von dem ergänzenden Ausgangsanschluss (14) geliefertes niederfrequentes moduliertes Signal synthetisiert, wobei der Mittelwert der niedrigen Frequenz gleich dem Wert der Zwischenfrequenz ist.

2. Senderempfänger (1) nach Anspruch 1, **dadurch gekennzeichnet, dass** der elektronische Chip (2) ferner eine programmierbare Versorgungskomponente (24) umfasst, die zwischen den Ausgang des zweiten Frequenzsynthetisierers (38) und den ergänzenden Ausgangsanschluss (14) geschaltet ist.

3. Senderempfänger (1) nach Anspruch 2, **dadurch gekennzeichnet, dass** die programmierbare Versorgungskomponente (24) ein programmierbarer niederfrequenter Verstärker oder eine programmierbare Spannungs- oder Stromquelle ist.

4. Senderempfänger (1) nach Anspruch 2 oder 3, **dadurch gekennzeichnet, dass** der zweite Frequenzsynthetisierer (38) ferner so konfiguriert ist, dass er das Signal, das er an die programmierbare Versorgungskomponente (24) liefert moduliert.

5. Senderempfänger (1) nach Anspruch 4, **dadurch gekennzeichnet, dass** die Modulation eine Frequenz- oder Phasenmodulation ist.

6. Senderempfänger (1) nach einem der Ansprüche 2 bis 5, **dadurch gekennzeichnet, dass** er ferner eine Infrarotdiode (8) oder optische Diode oder eine Komponente zum Senden eines Schall- oder Ultraschallsignals, die mit dem ergänzenden Ausgangsanschluss (14) des elektronischen Chips (2) verbunden ist, umfasst.

7. Senderempfänger (1) nach einem der vorhergehenden Ansprüche, **dadurch gekennzeichnet, dass** er ferner eine Infrarotdiode (6) oder optische Diode oder einen piezoelektrischen Wandler, die/der mit dem ergänzenden Eingangsanschluss (12) des elektronischen Chips (2) verbunden ist, umfasst.

8. Senderempfänger (1) nach einem der vorhergehenden Ansprüche, **dadurch gekennzeichnet, dass** er ferner eine Antenne (4) zum Senden und Empfangen von Hochfrequenzsignalen, die mit dem Hochfrequenz-Eingangs/Ausgangs-Anschluss (10) des elektronischen Chips (2) verbunden ist, umfasst.

9. Senderempfänger (1) nach einem der vorhergehenden Ansprüche, **dadurch gekennzeichnet, dass** die Filter- und Verstärkungsstufe (32) ein Tiefpass- oder Bandpassfilter (40) und mindestens einen Verstärker (42) für das gefilterte Zwischensignal, der mit dem Ausgang des Filters (40) verbunden ist, umfasst.

10. Senderempfänger (1) nach einem der vorhergehenden Ansprüche, **dadurch gekennzeichnet, dass** der erste Frequenzsynthetisierer (36) einen internen Sigma-Delta-Modulator umfasst und dass der zweite Frequenzsynthetisierer (38) einen Teil des ersten Frequenzsynthetisierers (36) bildet und so konfiguriert ist, dass er den internen Sigma-Delta-Modulator für die Synthese des modulierten Signals, das von dem ergänzenden Ausgangsanschluss (14) geliefert wird, verwendet.

11. Senderempfänger (1) nach einem der vorhergehenden Ansprüche, **dadurch gekennzeichnet, dass** der elektronische Chip (2) ferner einen rauscharmen Empfangsverstärker (18) umfasst, der zwischen den Hochfrequenz-Eingangs/Ausgangs-Anschluss (10) und einen Eingang des Mischers (28) geschaltet ist.

12. Senderempfänger (1) nach einem der vorhergehenden Ansprüche, **dadurch gekennzeichnet, dass** der elektronische Chip (2) ferner einen Leistungsverstärker (20) umfasst, der zwischen den Ausgang des ersten Frequenzsynthetisierers (36) und den Hochfrequenz-Eingangs/Ausgangs-Anschluss (10) geschaltet ist.

13. Senderempfänger (1) nach einem der vorhergehenden Ansprüche, **dadurch gekennzeichnet, dass** der elektronische Chip (2) ferner einen Niederfrequenz-Empfangsverstärker (22) umfasst, der zwischen den ergänzenden Eingangsanschluss (12) und einen Eingang des Schalters (30) geschaltet ist.

## Claims

1. Transmitter-receiver (1) comprising an electronic chip (2), the electronic chip (2) including a radio frequency input and output terminal (10) intended to receive and to transmit a radio frequency signal via an antenna (4) of the transmitter-receiver (1), an auxiliary input terminal (12) intended to receive a signal originating from an optoelectronic or piezoelectric transducer, and an auxiliary output terminal (14) intended to supply a modulated low-frequency signal to a pressure, sound or optical wave emitting component (8), the electronic chip (2) further including a mixer (28) for mixing the frequency of a received radio frequency signal with that of an oscillating signal supplied by a first frequency synthesiser (36) in order to supply an intermediate periodic signal at an intermediate frequency, a switch having two inputs (30) connected on the one hand to an output of the mixer (28) and on the other hand to the auxiliary input terminal (12), a filter and gain stage (32) connected to the output of the switch (30), and a modulator-demodulator (34) connected to the output of the filter and gain stage (32), the first frequency synthesiser (36) being connected between the output of the modulator-demodulator (34) and the radio frequency input and output terminal (10), the first frequency synthesiser (36) being configured such that it supplies a frequency-modulated signal to the radio frequency input and output terminal (10),
**characterised in that** the electronic chip (2) further includes a second frequency synthesiser (38) connected between the output of the modulator-demodulator (34) and the auxiliary output terminal (14), the second frequency synthesiser (38) being configured such that it synthesises a modulated low-frequency signal supplied by the auxiliary output terminal (14), the centre value of said low frequency being equal to the value of the intermediate frequency.

2. Transmitter-receiver (1) according to claim 1, **characterised in that** the electronic chip (2) further comprises a programmable supply component (24) connected between the output of the second frequency synthesiser (36) and the auxiliary output terminal (14).

3. Transmitter-receiver (1) according to claim 2, **characterised in that** the programmable supply component (24) is a programmable low-frequency amplifier or a programmable current or voltage source.

4. Transmitter-receiver (1) according to claim 2 or 3, **characterised in that** the second frequency synthesiser (38) is further configured such that it modulates the signal that it supplies to the programmable supply component (24).

5. Transmitter-receiver (1) according to claim 4, **characterised in that** said modulation is a frequency or phase modulation.

6. Transmitter-receiver (1) according to any one of claims 2 to 5, **characterised in that** it further comprises an infrared diode (8) or optical diode, or a component for transmitting a sound or ultrasound signal connected to the auxiliary output terminal (14) of the electronic chip (2).

7. Transmitter-receiver (1) according to any one of the preceding claims, **characterised in that** it further comprises an infrared diode (6) or optical diode, or a piezoelectric transducer connected to the auxiliary input terminal (12) of the electronic chip (2).

8. Transmitter-receiver (1) according to any one of the preceding claims, **characterised in that** it further comprises an antenna (4) for transmitting and for receiving radio frequency signals, connected to the radio frequency input and output terminal (10) of the electronic chip (2).

9. Transmitter-receiver (1) according to any one of the preceding claims, **characterised in that** the filter and gain stage (32) comprises a lowpass filter or band-pass filter (40), and at least one amplifier (42) for amplifying the filtered intermediate signal, connected at the output of the filter (40).

10. Transmitter-receiver (1) according to any one of the preceding claims, **characterised in that** the first frequency synthesiser (36) comprises an internal sigma-delta modulator, and **in that** the second frequency synthesiser (38) forms a part of the first frequency synthesiser (36) and is configured such that it uses said internal sigma-delta modulator to synthesise the modulated signal supplied by the auxiliary output terminal (14).

11. Transmitter-receiver (1) according to any one of the preceding claims, **characterised in that** the electronic chip (2) further comprises a receiving low-noise amplifier (18) connected between the radio frequency input and output terminal (10) and an input of the mixer (28).

12. Transmitter-receiver (1) according to any one of the preceding claims, **characterised in that** the electronic chip (2) further comprises a power amplifier (20) connected between the output of the first frequency synthesiser (36) and the radio frequency input and output terminal (10).

13. Transmitter-receiver (1) according to any one of the preceding claims, **characterised in that** the electronic chip (2) further comprises a receiving low-frequency amplifier (22) connected between the auxiliary input terminal (12) and an input of the switch (30).
